# EUROPÄISCHE PATENTANMELDUNG

(11) **EP 4 566 752 A1**
(43) Veröffentlichungstag der Anmeldung: **11.06.2025**
(21) Anmeldenummer: 23215160.5
(22) Anmeldetag: 08.12.2023
(51) Int. Cl.: B23Q 11/00, B23Q 11/08, B25J 9/00, B25J 11/00, B25J 19/06

(54) **AUTOMATISCHE BEARBEITUNGSSTATION ZUM BEARBEITEN VON WERKSTÜCKEN MIT INTE-GRIERTER BARRIERE FÜR EINEN SICHERHEITSBEREICH**

(71) Anmelder: Lorenscheit, Thomas, 29490 Neu Darchau (DE); Lorenscheit, Nadine, 29490 Neu Darchau (DE)
(72) Erfinder: Lorenscheit, Thomas, 29490 Neu Darchau (DE); Lorenscheit, Nadine, 29490 Neu Darchau (DE)
(74) Vertreter: Raffay & Fleck

(57) **Zusammenfassung**

Offenbar wird eine automatische Bearbeitungsstation (1) zum Bearbeiten von Werkstücken. Sie umfasst eine Bearbeitungsmaschine (2) und eine Ladeeinrichtung (5). Die Bearbeitungsmaschine (2) hat einen mit einer verschließbaren Beladeöffnung versehenen Bearbeitungsraum (3). Die Ladeeinrichtung (5) weist einen Laderoboter (6) zum automatisierten Einsetzten und Entnehmen von Werkstücken in den und aus dem Bearbeitungsraum (3) der Bearbeitungsmaschine (2) auf. Eine Steuerung zum automatisierten Betreiben der Bearbeitungsstation (1) ist vorgesehen. In einem an die Beladeöffnung angrenzenden Bereich der Bearbeitungsstation (1) ist ein Sicherheitsbereich bestimmt. Die Bearbeitungsstation (1) weist eine aus einer zurückgezogenen Position, in der der Sicherheitsbereich freigegeben und für Bedienpersonal frei zugänglich ist, in eine ausgestellte Position, in der der Sicherheitsbereich blockiert ist, verlagerbare Barriere (7) auf. Ein mit der Steuerung signaltechnisch verbundener Positionsdetektor überwacht die Position der Barriere (7) dahingehend, dass er ein Freigabesignal an die Steuerung dann übermittelt, wenn die Barriere (7) in der ausgestellten Position befindlich ist. Die Steuerung ist eingerichtet, einen automatisierten Bearbeitungsablauf nur dann freizugeben, wenn sie das Freigabesignal empfängt.

## Beschreibung

Die Erfindung betrifft eine automatische Bearbeitungsstation zum Bearbeiten von Werkstücken. Eine solche Bearbeitungsstation umfasst eine Werkstückbearbeitungsmaschine, die einen mit einer verschließbaren Beladeöffnung versehenen Bearbeitungsraum aufweist. Sie umfasst ferner eine Ladeeinrichtung mit einem Laderoboter zum automatisierten Einsetzten und Entnehmen von Werkstücken in den und aus dem Bearbeitungsraum der Bearbeitungsmaschine. Sie umfasst zudem eine Steuerung zum automatisierten Betreiben der Bearbeitungsstation.

In der Bearbeitung von Werkstücken werden Bearbeitungsmaschinen eingesetzt, die die Werkstückbearbeitung, insbesondere spanend, durchführen. Zu nennen sind hier beispielsweise Fräsmaschinen oder auch Drehmaschinen, wie CNC-Drehmaschinen. In einer hergebrachten Arbeitsweise werden die Bearbeitungsmaschinen von einer Bedienperson, einem sog. Werker, manuell mit zu bearbeitenden Werkstücken bestückt, werden die zu bearbeitenden Werkstücke von dem Werker auch manuell wieder aus dem Bearbeitungsraum der Bearbeitungsmaschine entnommen. Für eine derartige manuelle Bestückung, z.B. einer CNC Drehmaschine, wird durch den Werker zum Spannen des Werkstückes z.B. ein Fußtaster betätigt, der die, häufig hydraulisch oder auch pneumatisch induzierte, Spannbewegung im Futter auslöst.

Der Werker entscheidet dabei also durch seine Aktion, wann die Spannbewegung ausgeführt wird, und kann somit sicherstellen, dass sich keine seiner Extremitäten zwischen Werkstück und Spannmittel befinden, die verletzt werden könnten, dass also ein Spannvorgang sicher und unfallfrei vollzogen wird.

Neben den klassisch manuell zu bestückenden Bearbeitungsmaschinen gibt es auch solche, die in einer Bearbeitungsstation mit einer Ladeeinrichtung zusammenarbeiten, wobei das Be- und Entladen des Bearbeitungsraums der Bearbeitungsmaschine typischerweise mittels eines Laderoboters der Ladestation durchgeführt wird. Bei derartigen Bearbeitungsstationen läuft also nicht allein die maschinelle Bearbeitung des Werkstücks in der Bearbeitungsmaschine automatisch ab, sondern erfolgen auch die Rüstvorgänge, also das Be- und Entladen der Bearbeitungsmaschine, automatisiert. Insbesondere kann die Bearbeitungsstation dabei einen kollaborativ arbeitenden Roboter, einen sog. Cobot, als Laderoboter aufweisen, der für ein Zusammenarbeiten mit einer Bedienperson ausgelegt ist.

Auch in solchen Bearbeitungsstationen ist es weiterhin erforderlich, dass Bedienpersonal Zugang zu der Bearbeitungsmaschine, insbesondere zu dem Bearbeitungsraum, hat und nehmen kann, um z.B. im Falle von Störungen eingreifen zu können oder auch um Reparatur- oder Reinigungsarbeiten durchführen zu können. Dieses Erfordernis führt dazu, dass die Bedienperson sich in einen Bereich begeben muss, in dem eine Gefährdung durch die Maschinenteile der Bearbeitungsstation gegeben ist. Dieser Bereich wird hier als Sicherheitsbereich bezeichnet. Um dabei einer möglichen Gefährdung der Bedienperson durch im Betrieb sich bewegende Maschinenteile vorzubeugen und somit insbesondere der Arbeitssicherheit genüge zu tun, sind hierbei Maßnahmen zu treffen, die mögliche Kollisionssituationen vermeiden.

Ist im automatischen Ablauf der Laderoboter nicht extern abgesichert, ist also auch der Bereich der Bearbeitungsmaschine für den Mitarbeiter während des Be-/Entladevorgangs zugänglich, bedeutet ein automatisch durch ein erfolgtes Beladen durch den Laderoboter ausgelöster Spannvorgang, auf den der Werker keinen Einfluss nehmen kann, für den Werker eine potentielle Gefährdung.

Um hier eine Absicherung zu erreichen, wird im Stand der Technik auf eine sensorische Überwachung eines ausgewiesenen Sicherheitsbereichs mittels Bewegungs- oder Anwesenheitsdetektoren zurückgegriffen, die ein Eindringen einer Person oder auch anderer Gegenstände in den Sicherheitsbereich erfasst und bei einer solchen Erfassung dann einen automatisch ablaufenden Prozess stoppt. Ein Beispiel für eine solche Lösung ist in der EP 4 070 921 A1 beschrieben. Bei der dort beschriebenen Lösung geht es insbesondere um die mittels einer derartigen Sensorlösung erhaltene Absicherung eines Sicherheitsbereichs zur Vermeidung von durch den Cobot ausgelösten Gefährdungen.

Die Erfindung sucht hier einen alternativen Ansatz, der einfach umsetzbar ist und der insbesondere auch die durch die Bearbeitungsmaschine selbst ausgelöste Gefährdung mit einbezieht.

Diese Aufgabe wird erfindungsgemäß gelöst durch eine automatische Bearbeitungsstation mit den Merkmalen des Anspruchs 1. Vorteilhafte Weiterbildungen sind in den abhängigen Ansprüchen 2 bis 8 angegeben. Einen weiteren Aspekt einer Lösung der Aufgabe bildet eine Ladeeinrichtung für eine automatische Bearbeitungsstation mit den Merkmalen des Anspruchs 9.

Erfindungsgemäß umfasst eine automatische Bearbeitungsstation zum Bearbeiten von Werkstücken eine Werkstückbearbeitungsmaschine auf, die einen Bearbeitungsraum mit einer verschließbaren Beladeöffnung umfasst, und zudem eine Ladeeinrichtung, wobei die Ladeeinrichtung einen Laderoboter zum automatisierten Einsetzten und Entnehmen von Werkstücken in den und aus dem Bearbeitungsraum der Bearbeitungsmaschine aufweist. Weiterhin ist eine Steuerung zum automatisierten Betreiben der Bearbeitungsstation vorgesehen. Bei der Bearbeitungsstation ist nun in einem an die Beladeöffnung angrenzenden Bereich der Bearbeitungsstation ein Sicherheitsbereich bestimmt und ist eine Barriere vorgesehen. Diese Barriere kann zwischen einer zurückgezogenen Position, in der der Sicherheitsbereich freigegeben und für Bedienpersonal frei zugänglich ist, und einer ausgestellten Position, in der der Sicherheitsbereich blockiert ist, verlagert werden. Weiterhin ist ein mit der Steuerung signaltechnisch verbundener Positionsdetektor vorgesehen, der die Position der Barriere dahingehend überwacht, dass er ein Freigabesignal an die Steuerung dann übermittelt, wenn die Barriere in der ausgestellten Position befindlich ist. Die Steuerung ist schließlich eingerichtet, einen automatisierten Bearbeitungsablauf nur dann freizugeben, wenn sie das Freigabesignal empfängt.

Diese erfindungsgemäße Lösung stellt eine technisch mit einfachen Mitteln umsetzbare, gleichwohl sehr effiziente Lösung dar, einen Sicherheitsbereich, in dem eine Bedienperson, insbesondere auch durch von der Bearbeitungsmaschine ausgehende Gefahren, gefährdet ist, zu überwachen. Nur dann, nämlich, wenn die Barriere in der ausgestellten Position befindlich ist, in der sie einerseits sichtbar, andererseits aber auch physisch den Zugang zu dem Sicherheitsbereich versperrt, wird der Bearbeitungsprozess freigegeben. Wenn die Barriere aus der ausgestellten Position heraus verlagert wird in Richtung der zurückgezogenen Position, wird dies durch den Detektor erfasst und wird dann insbesondere ein automatisch ablaufender Prozess der Bearbeitungsstation angehalten.

Die Barriere kann zwar als eine unüberwindbare Wand vorgesehen sein. Dies ist aber nicht zwingend erforderlich. Sie kann z.B. auch als eine geländerförmige Absperrung gebildet sein, die z.B. in der ausgestellten Position auf Hüft-, Bauch- oder Brusthöhe liegt und somit für eine Bedienperson deutlich wahrnehmbar ist und nicht ohne ein aktives Fehlverhalten überwunden werden kann.

Die Barriere kann z.B. klappbar zwischen der zurückgezogenen und der ausgestellten Position bewegbar sein, oder auch teleskopierbar, ausziehbar oder auch in anderer Weise. Sie kann manuell durch eine Bedienperson zu bewegen sein oder auch automatisch, z.B. motorisch getrieben.

Um den automatisiert ablaufenden Prozess auf der Bearbeitungsstation starten zu können, muss die Barriere in die ausgestellte Position verbracht werden. Wenn eine Bedienperson wiederum ungehindert in den Sicherheitsbereich gelangen will, muss sie die Barriere in die zurückgezogene Position verbringen. Dies wird, wie dargelegt, sensorisch überwacht. Die Steuerung, bei der es sich insbesondere um eine mit der Bearbeitungsmaschine gekoppelte Steuerung des Laderoboters handeln kann, unterbricht daraufhin umgehend den Automatikmodus. Somit gibt es für die Bedienperson dann keine Gefährdung mehr. Will die Bedienperson den Automatikmodus wieder starten, muss sie die Barriere wiederum in die ausgestellte Position überführen, was ihr nur dann gelingen kann, wenn sie den Sicherheitsbereich verlassen hat.

Die Ladeeinrichtung kann erfindungsgemäß einen Korpus aufweisen. Dieser Korpus kann kastenartig gebildet sein. An einem Korpus der Ladeeinrichtung kann die Barriere verlagerbar angeordnet sein. Letzteres führt insbesondere dazu, dass, gerade dann, wenn die Steuerung, mit der der Positionsdetektor zum Erfassen der ausgestellten Position der Barriere verbunden ist, ebenfalls in der Ladeeinrichtung integriert ist, die Ladeeinrichtung mit dem Laderoboter als ein eigenständiges Modul gebildet und angeboten werden kann. Ein solches Modul kann dann mit einer bestehenden, herkömmlich manuell zu beladenden Bearbeitungsmaschine zu einer erfindungsgemäßen Bearbeitungsstation kombiniert, eine solche bestehend Bearbeitungsmaschine kann also entsprechend nach-, bzw. aufgerüstet werden.

In der erfindungsgemäßen Bearbeitungsstation kann die Ladeeinrichtung insbesondere so positioniert sein, dass sie den Sicherheitsbereich zu einer Seite jedenfalls teilweise begrenzt. Die Ladeeinrichtung stellt dann gleichermaßen selbst einen Teil einer physischen Barriere zur Absicherung des Sicherheitsbereichs dar.

Die Bearbeitungsstation kann zudem eine Projektionseinrichtung enthalten, die eingerichtete ist, eine Markierung des Sicherheitsbereichs auf einen Boden zu projizieren. Eine solche Projektionseinrichtung kann auch bei einer in die zurückgezogene Position verbrachten Barriere den Sicherheitsbereich kenntlich machen und kann zudem eine zusätzliche Anzeige des Sicherheitsbereichs auch bei in der ausgestellten Position befindlicher Barriere bieten. Mit Vorteil kann eine solche Projektionseinrichtung an der Ladeeinrichtung angeordnet sein.

Weiterhin kann die Ladeeinrichtung eine Auflage mit einer Magazinaufnahme zum Aufnehmen von in der Bearbeitungsmaschine zu bearbeitenden und/oder von in der Bearbeitungsmaschine bearbeiteten Werkstücken aufweisen. So kann die Bearbeitungsstation mit einer Mehrzahl von Werkstücken bestückt werden, die sie dann automatisiert bearbeiten kann.

Der Laderoboter kann mit Vorteil ein kollaborativ arbeitender Roboter, ein sogenannter Cobot, sein.

Bei der Bearbeitungsmaschine der erfindungsgemäßen Bearbeitungsstation kann es sich insbesondere um eine, insbesondere Mehrachs-, Drehmaschine handeln, z.B. eine CNC-Drehmaschine.

Gegenstand der Erfindung ist auch eine Ladeeinrichtung die zusammen mit einer Werkstückbearbeitungsmaschine zu einer automatischen Bearbeitungsstation kombiniert werden kann, wie sie vorstehend dargelegt worden ist. Eine solche auch isoliert einen Gegenstand gemäß der Erfindung bildende Ladeeinrichtung verfügt über einen Korpus, an dem ein Laderoboter zum automatisierten Einsetzten und Entnehmen von Werkstücken in einen und aus einem Bearbeitungsraum einer Bearbeitungsmaschine angeordnet ist. Die Ladeeinrichtung zeichnet sich dadurch aus, dass an dem Korpus eine aus einer zurückgezogenen Position in eine ausgestellte Position verlagerbare Barriere angeordnet ist. Diese Barriere blockiert in der ausgestellten Position einen an den Korpus angrenzenden Sicherheitsbereich und gibt diesen Sicherheitsbereich in der zurückgezogenen Position frei. Der Sicherheitsbereich ist dabei so gewählt, dass dieser dann, wenn die Ladeeinrichtung mit einer Bearbeitungsmaschine zu einer Bearbeitungsstation kombiniert ist, einen Bereich absichert, in dem der Bearbeitungsraum zugänglich ist und in dem von dem Bearbeitungsraum bei geöffneter Beladeöffnung eine potentielle Gefahr für eine Bedienperson ausgeht. Die Ladeeinrichtung weist erfindungsgemäß zudem einen Positionsdetektor auf, der die Position der Barriere dahingehend überwacht, dass er ein Freigabesignal ausgibt, wenn die Barriere in der ausgestellten Position befindlich ist. Dabei wird das Freigabesignal auf einer Signalleitung ausgegeben, die dieses Signal an eine Steuerung einer Bearbeitungsstation vermitteln kann, so dass diese Steuerung einen automatisierten Bearbeitungsablauf nur dann freigeben kann, wenn sie das Freigabesignal empfängt. Diese Steuerung kann z.B., jedenfalls in einem Teil, in der Ladeeinrichtung integriert sein, wobei eine Datenverbindung bzw. eine Schnittstelle für eine Datenverbindung, zu einer Steuerung oder einem Steuerungsmodul in der Bearbeitungsmaschine bereitgestellt sein kann.

Weitere Vorteile und Merkmale der Erfindung ergeben sich aus der nachstehenden Beschreibung möglicher Ausführungsbeispiele anhand der beigefügten Figuren.

Dabei zeigen:
- Fig. 1: eine schematische dreidimensionale Ansicht einer erfindungsgemäßen Bearbeitungsstation mit in einer zurückgezogenen Position befindlichen Barriere;
- Fig. 2: eine schematische dreidimensionale Ansicht der erfindungsgemäßen Bearbeitungsstation gemäß Fig. 1 mit der Barriere in einer ausgestellten Position; und
- Fig. 3: eine schematische dreidimensionale Ansicht einer erfindungsgemäßen Bearbeitungsstation in einer abweichenden Ausgestaltung mit in zurückgezogener Position befindlicher Barriere und einer Projektionseinrichtung, die eine Markierung des Sicherheitsbereichs auf den Boden projiziert.

In den Figuren sind mögliche Varianten einer Umsetzung der hier offenbarten Erfindung gezeigt. Die Figuren sind dabei schematischer Natur und zeigen nicht sämtliche Konstruktionsdetails. Sie sind nicht maßstabsgetreu und sollen vielmehr einer vertiefenden Erläuterung der Grundprinzipien und wesentlichen Merkmale der Erfindung dienen.

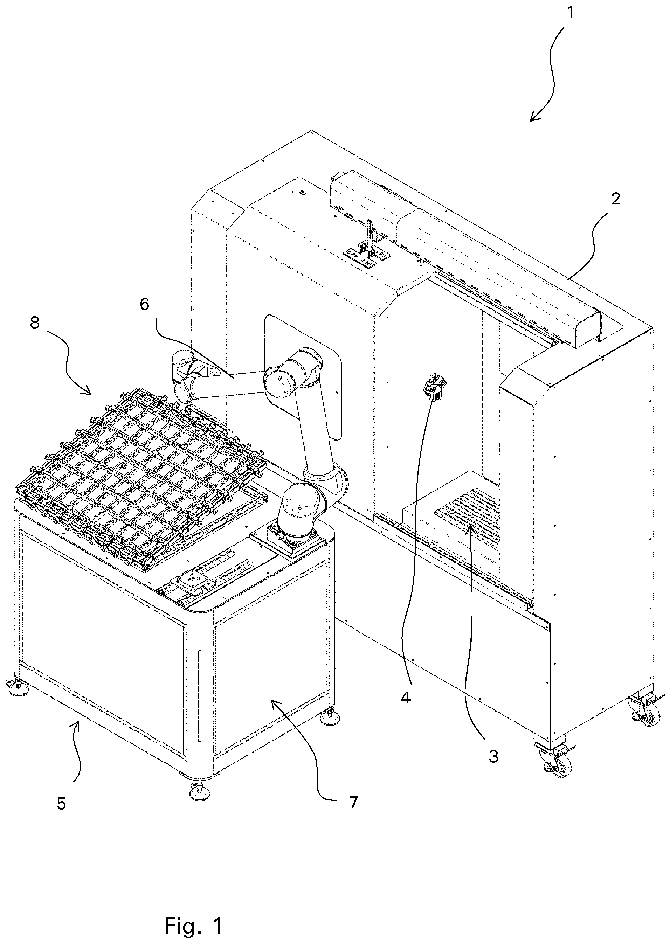

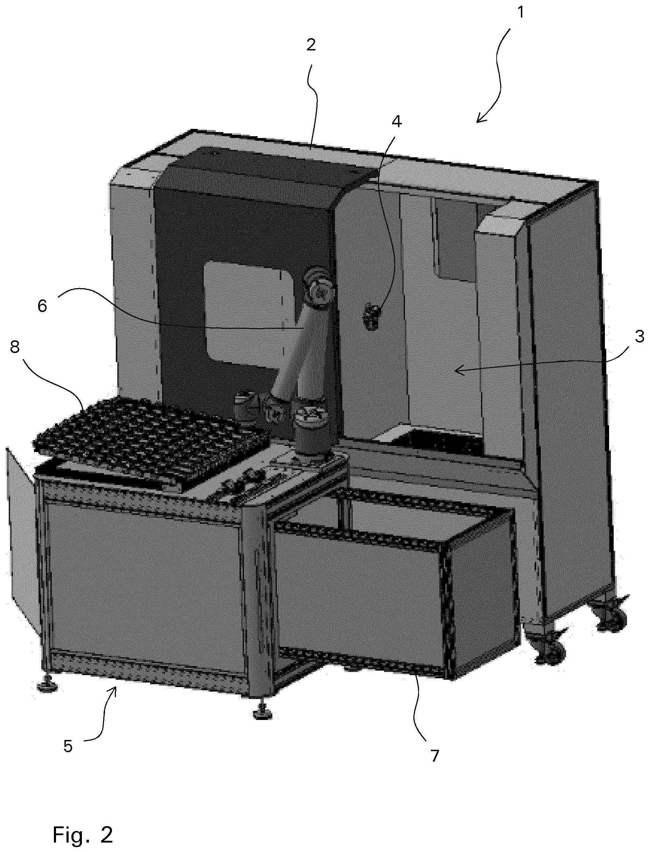

In den Figuren 1 und 2 ist in zwei schematischen Darstellungen der Aufbau und ist die Funktion einer erfindungsgemäßen Bearbeitungsstation 1 gezeigt, die eine ebenfalls erfindungsgemäße Ladeeinrichtung 5 enthält.

Die Bearbeitungsstation 1 enthält zunächst einmal eine Bearbeitungsmaschine 2, bei der es sich z.B. um eine Werkzeugmaschine, wie etwa eine CNC-Drehmaschine, handeln kann. Die Bearbeitungsmaschine 2 weist einen Bearbeitungsraum 3 auf, in dem ein zu bearbeitendes Werkstück aufgenommen wird, insbesondere durch Einspannen in einer Spannvorrichtung 4. Der Bearbeitungsraum 3 ist über eine in den Figuren offen dargestellte Beladeöffnung zugänglich, um ein Werkstück in den Bearbeitungsraum 3 einsetzen, insbesondere in die Spannvorrichtung 4 einbringen, zu können, bzw. um ein bearbeitetes Werkstück aus dem Bearbeitungsraum 3, insbesondere aus der Aufspannung in der Spannvorrichtung 4, entnehmen zu können. Diese Beladeöffnung kann mit einer - in den Figuren nicht näher bezeichneten - Verschlusseinrichtung, insbesondere automatisch, verschlossen werden, z.B. einer, insbesondere angetrieben verlagerbaren, Schiebetür, die z.B. auch ein Sichtfenster enthalten kann.

Vor der Bearbeitungsmaschine 2 ist die Ladeeinrichtung 5 angeordnet. Diese kann in der gezeigten Ausführungsform insbesondere einen kastenartigen Korpus aufweisen, an dem ein Laderoboter 6 angeordnet ist. Dieser Laderoboter 6 hat einen Roboterarm und einen Greifer. Mit dem Greifer kann der Laderoboter 6 Werkstücke erfassen und diese dann durch Bewegen des Roboterarms in den Bearbeitungsraum 3 der Bearbeitungsmaschine 2, insbesondere zum Aufspannen in der Spannvorrichtung 4, verbringen. Ebenso kann der Laderoboter 6 mit dem Greifer nach dem Bearbeiten ein Werkstück in dem Bearbeitungsraum 3 ergreifen und durch Bewegen des Roboterarms wiederum zurückholen aus dem Bearbeitungsraum und übergeben für eine weitere Verarbeitung des Werkstücks.

An der Ladeeinrichtung 5 ist eine Barriere 7 verlagerbar angeordnet, die reversibel verlagert werden kann zwischen einer zurückgezogenen Position, in der die Barriere 7, wie in Fig. 1 gezeigt, in dem Korpus der Ladeeinrichtung 5 liegt, und einer ausgestellten Position, in der die Barriere, wie in Fig. 2 gezeigt vorgezogen ist, insbesondere vorstehend in einen Bereich vor der Beladeöffnung des Bearbeitungsraums 3 der Bearbeitungsmaschine 2 und diesen Bereich überspannend. Der von der Barriere in der ausgestellten Position überlagerte Bereich ist dabei ein Sicherheitsbereich, in dem, wenn er von einer Bedienperson betreten wird, diese Bedienperson prinzipiell einer Gefährdung durch die Bearbeitungsmaschine 2, insbesondere durch in dem Bearbeitungsraum 3 angeordnete Elemente, wie die Spannvorrichtung 4 oder auch Werkzeugschneiden oder dergleichen, ausgesetzt sein kann.

In der Ladeeinrichtung 5 ist ein Positionsdetektor integriert, der die Position der Barriere 7 überwacht und der nur dann ein Freigabesignal ausgibt, wenn er erkennt, dass die Barriere 7 in der in Fig. 2 gezeigten ausgestellten Position befindlich ist. Dieses Freigabesignal wird einer hier nicht gezeigten Steuerung zugeführt, die eine Freigabe des auf der Bearbeitungsmaschine automatisiert zu führenden Prozesses, z.B. eines Einspannens des Werkstücks und einer darauffolgende Bearbeitung, nur dann erlaubt, wenn das Freigabesignal von dem Positionsdetektor anliegt. Die Barriere 7 kann dabei automatisch zwischen der zurückgezogenen Position und der ausgestellten Position verlagerbar sein. Sie kann aber insbesondere auch rein manuell verlagerbar sein, so dass eine Bedienperson, dann, wenn ein Bearbeitungsprozess auf der Bearbeitungsmaschine 2 gestartet werden soll, wenn insbesondere eine automatische Bestückung der Bearbeitungsmaschine 2 mithilfe des Laderoboters 6, insbesondere ein Einspannen eines Werkstücks in die Spannvorrichtung 4, erfolgen soll, oder wenn ein Werkstück aus dem Bearbeitungsraum 3 mittels des Laderoboters 6 entnommen werden soll, zunächst einmal die Barriere 7 manuell in die ausgestellte Position verlagern muss, so dass der Positionsdetektor dies erkennt und das Freigabesignal ausgibt.

In den Figuren ist weiterhin eine mögliche Ausgestaltung derart gezeigt, dass die Ladeeinrichtung 5 auf einer Oberfläche eine Magazinaufnahme 8 umfasst, in der Werkstücke in definierten Positionen angeordnet werden können. So können in dieser Magazinaufnahme 8 z.B. Werkstücke in einer größeren Anzahl positioniert werden, die dann von dem Laderoboter 6 sukzessive dort entnommen und jeweils für die Bearbeitung in den Bearbeitungsraum 3 der Bearbeitungsmaschine 2 verbracht und dort positioniert werden können. Auch können fertigbearbeitete Werkstücke zurück in die Magazinaufnahme 8 gesetzt werden, bevor sie dann für eine weitere Bearbeitung, sei dies für einen nachfolgenden maschinellen oder auch manuellen Bearbeitungsschritt oder auch für ein Verpacken und Versenden oder aber für einen Einbau in eine komplexere Einrichtung oder Vorrichtung, der Magazinaufnahme 8 entnommen werden.

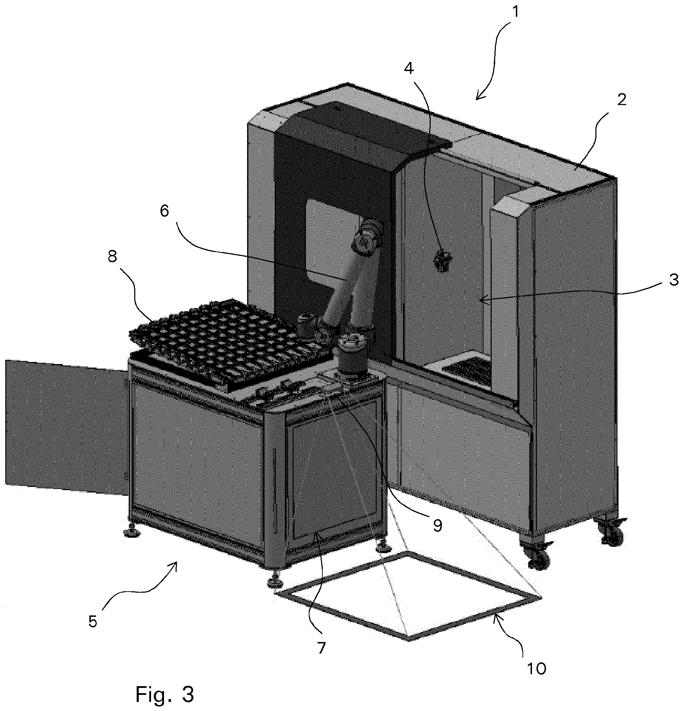

In der Fig. 3 ist eine optionale Weiterung der erfindungsgemäßen Bearbeitungsstation 1 gezeigt, bei der an der Ladeeinrichtung 5 eine Projektionseinrichtung 9 angeordnet ist, mit der eine Projektion 10 auf den Boden vor der Ladeeinrichtung 5 erzeugt werden kann, die zusätzlich zu der Barriere 7 den Sicherheitsbereich markiert. Dies kann einer Bedienperson helfen, den Sicherheitsbereich zu erkennen und dadurch zusätzlich Vorsicht beim Betreten dieses Bereichs walten zu lassen.

### Bezugszeichenliste

- 1: Bearbeitungsstation
- 2: Bearbeitungsmaschine
- 3: Bearbeitungsraum
- 4: Spannvorrichtung
- 5: Ladeeinrichtung
- 6: Laderoboter
- 7: Barriere
- 8: Magazinaufnahme
- 9: Projektionseinrichtung
- 10: Projektion

## Patentansprüche

1. Automatische Bearbeitungsstation (1) zum Bearbeiten von Werkstücken mit einer einen mit einer verschließbaren Beladeöffnung versehenen Bearbeitungsraum (3) aufweisenden Bearbeitungsmaschine (2) und einer Ladeeinrichtung (5), wobei die Ladeeinrichtung (5) einen Laderoboter (6) zum automatisierten Einsetzten und Entnehmen von Werkstücken in den und aus dem Bearbeitungsraum (3) der Bearbeitungsmaschine (2) aufweist, und mit einer Steuerung zum automatisierten Betreiben der Bearbeitungsstation (1), **dadurch gekennzeichnet, dass** in einem an die Beladeöffnung angrenzenden Bereich der Bearbeitungsstation (1) ein Sicherheitsbereich bestimmt ist und dass die Bearbeitungsstation (1) eine aus einer zurückgezogenen Position, in der der Sicherheitsbereich freigegeben und für Bedienpersonal frei zugänglich ist, in eine ausgestellte Position, in der der Sicherheitsbereich blockiert ist, verlagerbare Barriere (7) aufweist, wobei ein mit der Steuerung signaltechnisch verbundener Positionsdetektor vorgesehen ist, der die Position der Barriere (7) dahingehend überwacht, dass er ein Freigabesignal an die Steuerung dann übermittelt, wenn die Barriere (7) in der ausgestellten Position befindlich ist und dass die Steuerung eingerichtet ist, einen automatisierten Bearbeitungsablauf nur dann freizugeben, wenn sie das Freigabesignal empfängt.

2. Automatische Bearbeitungsstation (1) nach Anspruch 1, **dadurch gekennzeichnet, dass** die Ladeeinrichtung (5) einen Korpus aufweist, an dem die Barriere (7) verlagerbar angeordnet ist.

3. Automatische Bearbeitungsstation (1) nach einem der vorhergehenden Ansprüche, **dadurch gekennzeichnet, dass** die Ladeeinrichtung (5) einen kastenartigen Korpus aufweist.

4. Automatische Bearbeitungsstation (1) nach einem der vorhergehenden Ansprüche, **dadurch gekennzeichnet, dass** die Ladeeinrichtung (5) so positioniert ist, dass sie den Sicherheitsbereich zu einer Seite jedenfalls teilweise begrenzt.

5. Automatische Bearbeitungsstation (1) nach einem der vorhergehenden Ansprüche, **gekennzeichnet durch** eine Projektionseinrichtung (9), die eingerichtete ist, eine Markierung (10) des Sicherheitsbereichs auf einen Boden zu projizieren.

6. Automatische Bearbeitungsstation (1) nach einem der vorhergehenden Ansprüche, **dadurch gekennzeichnet, dass** die Ladeeinrichtung (5) eine Auflage aufweist mit einer Magazinaufnahme (8) zum Aufnehmen von in der Bearbeitungsmaschine (2) zu bearbeitenden und/oder von in der Bearbeitungsmaschine (2) bearbeiteten Werkstücken.

7. Automatische Bearbeitungsstation (1) nach einem der vorhergehenden Ansprüche, **dadurch gekennzeichnet, dass** der Laderoboter (6) ein kollaborativ arbeitender Roboter (Cobot) ist.

8. Automatische Bearbeitungsstation (1) nach einem der vorhergehenden Ansprüche, **dadurch gekennzeichnet, dass** die Bearbeitungsmaschine (2) eine, insbesondere Mehrachs-, Drehmaschine, Fräsmaschine oder Schleifmaschine ist.

9. Ladeeinrichtung (5) für eine automatische Bearbeitungsstation (1) nach einem der vorstehenden Ansprüche, mit einem Korpus und mit einem an dem Korpus angeordneten Laderoboter (6) zum automatisierten Einsetzten und Entnehmen von Werkstücken in einen und aus einem Bearbeitungsraum (3) einer Bearbeitungsmaschine (2), **dadurch gekennzeichnet, dass** an dem Korpus eine aus einer zurückgezogenen Position in eine ausgestellte Position verlagerbare Barriere (7) angeordnet ist, wobei die Barriere in der ausgestellten Position einen Sicherheitsbereich blockiert und wobei die Barriere in der zurückgezogenen Position den Sicherheitsbereich freigibt, wobei ferner die Ladeeinrichtung einen Positionsdetektor aufweist, der die Position der Barriere (7) dahingehend überwacht, dass er ein Freigabesignal ausgibt, wenn die Barriere (7) in der ausgestellten Position befindlich ist.
